# EUROPEAN PATENT APPLICATION

(11) **EP 4 693 070 A1**
(43) Date of publication of application: **11.02.2026**
(21) Application number: 25192833.9
(22) Date of filing: 30.07.2025
(51) Int. Cl.: G06F 16/40, G06F 16/41

(54) **METHOD FOR PROCESSING A MEDIA FILE, APPARATUS, ELECTRONIC DEVICE, AND STORAGE MEDIUM**

(30) Priority: 30.07.2024 CN 202411035944
(71) Applicant: Beijing Zitiao Network Technology Co., Ltd., Beijing 100190 (CN)
(72) Inventor: ZENG, Ping, Beijing, 100028 (CN); HE, Panlong, Beijing, 100028 (CN); HE, Meng, Beijing, 100028 (CN); XU, Jianhua, Beijing, 100028 (CN)
(74) Representative: Isarpatent

(57) **Abstract**

The embodiments of the present disclosure provide a method for processing a media file, an apparatus, an electronic device, a storage medium, and a program product. The method includes: in response to an interaction query operation, displaying first interactive information corresponding to at least one virtual object; and in response to a file generation operation input for the first interactive information, obtaining interactive associated content corresponding to the virtual object, and generating a target media file in a target file format based on the interactive associated content, where the interactive associated content includes at least part of scene content displayed in an interactive scene of the virtual object. The technical schemes of the embodiments of the present disclosure can effectively restore the interactive scene of a virtual object through scene content, so that the generated target media file is more suitable for the presentation effect during interaction, thereby effectively, vividly, and richly presenting the virtual object.

## Description

### CROSS-REFERENCE TO RELATED APPLICATION

The present application claims the priority to and benefits of the Chinese Patent Application No. 202411035944.2, which was filed on July 30, 2024. All the aforementioned patent applications are hereby incorporated by reference in their entireties.

### TECHNICAL FIELD

Embodiments of the present disclosure relate to computer application technology, particularly to a method, an apparatus, an electronic device, and a storage medium for processing a media file.

### BACKGROUND

With the rapid development of Internet technology and effects processing technology, the forms of online information interaction are becoming more and more abundant. In some scenes, information interaction occurs through the transfer of ownership of virtual objects. In order to enhance the interactive effect, virtual objects will also be presented in a visual way in the information interactive scene.

In related technologies, to record the presentation effect of virtual objects, it is necessary to manually operate the information interaction device for real-time recording after triggering the interaction operation of the virtual object. However, this real-time manual recording method in the process of information interaction relies heavily on manual operation, which may result in the inability to record the presentation effect of virtual objects well due to improper operation, especially in the scene where a plurality of virtual objects are included in the information interactive scene, leading to the delayed presentation of virtual objects.

### SUMMARY

The present disclosure provides method and apparatus, an electronic device, a storage medium and a program product for processing a media file, to generate media files related to virtual objects.

In a first aspect, embodiments of the present disclosure provide a method for processing a media file, the method may include:
in response to an interaction query operation, displaying first interactive information corresponding to at least one virtual object; and
in response to a file generation operation input for the first interactive information, obtaining interactive associated content corresponding to the virtual object, and generating a target media file in a target file format based on the interactive associated content, where the interactive associated content includes at least part of scene content displayed in an interactive scene of the virtual object.

In a second aspect, embodiments of the present disclosure provide an apparatus for processing a media file, and the apparatus may include:
an interactive list display module, which is configured to, in response to an interaction query operation, display first interactive information corresponding to at least one virtual object; and
a media file generation module, configured to, in response to a file generation operation input for the first interactive information, obtain interactive associated content corresponding to the virtual object, and generate a target media file in a target file format based on the interactive associated content, where the interactive associated content includes at least part of scene content displayed in an interactive scene of the virtual object.

In a third aspect, embodiments of the present disclosure provide an electronic device, and the electronic device includes:
at least one processor;
a storage apparatus configured to store one or more programs,
when the one or more programs are executed by the at least one processor, causing the at least one processor to implement the method for processing a media file according to any one of the embodiments of the present disclosure.

In a fourth aspect, embodiments of the present disclosure provide a non-transitory computer-readable storage medium having computer-executable instructions stored thereon, where the computer executable instructions, when executed by a computer processor, perform the method for processing a media file according to any one of the embodiments of the present disclosure.

In a fifth aspect, embodiments of the present disclosure further provide a computer program product including computer programs, the computer programs when executed by a processor implements the method for processing a media file according to any one of the embodiments of the present disclosure.

According to the technical scheme of the embodiments of the present disclosure, first interactive information corresponding to at least one virtual object is displayed in response to an interaction query operation, enabling intuitive viewing of the interaction records of the virtual object and facilitating tracking of the interaction and reception status of the object; then, in response to a file generation operation input for the first interactive information, the interactive associated content corresponding to the virtual object is obtained. After the virtual object interacts, the content query can be automatically performed through the first interactive information to obtain the interactive associated content of the virtual object. Since the interactive associated content includes at least part of scene content displayed in an interactive scene of the virtual object, the interactive scene of the virtual object can be effectively restored in combination with the scene content in the interactive scene. Furthermore, based on the interactive associated content, a target media file in the target file format is generated, which solves the technical problem in related technologies that may not be able to record the presentation effect of the virtual object well due to improper manual operation, so that the generated target media file is more suitable for the presentation effect during the interaction, and the situation during the interaction of the virtual object can be effectively, vividly and richly presented , thereby improving the viewing experience of the virtual object.

### BRIEF DESCRIPTION OF DRAWINGS

The foregoing and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
FIG. 1 is a flow schematic diagram of a method for processing a media file provided by embodiments of the present disclosure;
FIG. 2 is a flow schematic diagram of another method for processing a media file provided by embodiments of the present disclosure;
FIG. 3 is a schematic diagram of the interface of the first interactive information of a method for processing a media file provided by embodiments of the present disclosure;
FIG. 4 is a schematic diagram of the interface of the second interactive information of a method for processing a media file provided by embodiments of the present disclosure;
FIG. 5 is a schematic diagram of the interface for format setting operation of a method for processing a media file provided by embodiments of the present disclosure;
FIG. 6 is a structural schematic diagram of an apparatus for processing a media file media file provided by embodiments of the present disclosure; and
FIG. 7 is a structural schematic diagram of an electronic device provided by embodiments of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

The names of messages or information exchanged between a plurality of apparatuses in the implementations of the present disclosure are only for illustrative purposes, and are not intended to limit the scope of the messages or information.

It should be understood that before using the technical solutions disclosed in the embodiments of the present disclosure, the user should be informed of the type of personal information involved in the present disclosure, the scope of use, the usage scenario, and the like through an appropriate manner in accordance with relevant laws and regulations, and the user's authorization should be obtained.

For example, when the receiving of the active request from the user is responded to, prompt information is sent to the user, so as to explicitly prompt the user that the operation requested to be performed by the user will require the acquisition and use of the user's personal information. Thus, the user can independently choose whether to provide the personal information to the software or hardware such as the electronic device, the application, the server, or the storage medium that performs the operation of the technical solution of the present disclosure, according to the prompt information.

As an optional but non-limiting implementation, for example, the manner of sending the prompt information to the user in response to the receiving of the active request from the user may be a manner of a pop-up window, and the prompt information may be presented in text in the pop-up window. In addition, the pop-up window may also include a selection control for the user to select "agree" or "disagree" to provide the personal information to the electronic device.

It can be understood that the above process of notifying and acquiring the user's authorization is only illustrative, and does not constitute a limitation on the implementations of the present disclosure. Other manners that meet the requirements of relevant laws and regulations may also be applied to the implementations of the present disclosure.

It can be understood that the data involved in the technical solution (including but not limited to the data itself, the acquisition or use of the data) should comply with the requirements of corresponding laws and regulations and related provisions.

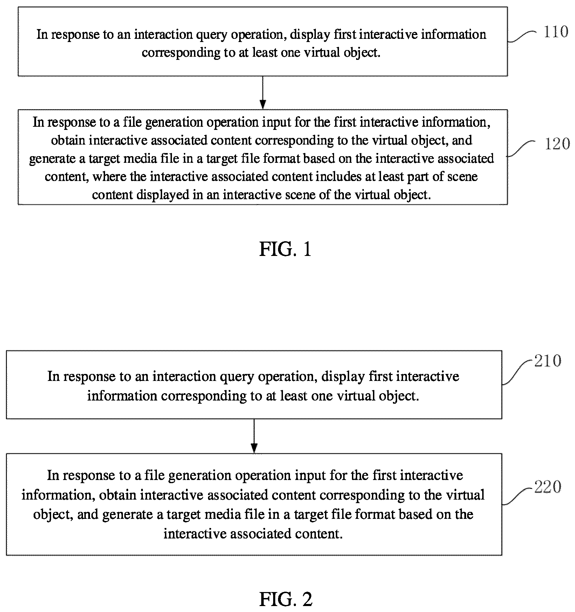

FIG. 1 is a flow schematic diagram of a method for processing a media file provided by embodiments of the present disclosure. The embodiments of the present disclosure are suitable for generating media files related to a virtual object interactive scene. The method may be performed by an apparatus for processing a media file, which can be implemented in the form of software and/or hardware, or alternatively, by an electronic device, which can be a mobile terminal, a personal computer (PC) or a server, etc. As shown in FIG. 1, the method of the embodiments may specifically include:
S110, in response to an interaction query operation, display first interactive information corresponding to at least one virtual object.

The interaction query operation can be understood as an operation triggered to query the interaction records of one or more virtual objects. The virtual object may be a constructed visual object existing in the digital world. In some scenes, the virtual object may be obtained by rendering object model constructed in model space. More specifically, the virtual object may include at least one selected from the group of equipment, clothing, accessories in online games, and virtual gifts in live streaming rooms. The first interactive information may be a brief description of the main content of the interactive event of the virtual object (such as event identification and/or summary information of the interactive event). The first interactive information may include but is not limited to at least one selected from the group consisting of an interaction operation, an interaction time, an interaction object, and an identification of a virtual object (including textual and/or graphical identification). There can be various interaction operations, such as triggering a change in the form of a virtual object and/or transferring the virtual object from the first object to the second object. For example, the content of the first interactive information may include "receiving virtual object B transferred by object A", and interaction time may be added on this basis. In order to make the display of virtual objects more intuitive, virtual objects may be presented in the form of graphics or animations.

It should be noted that, in the interactive scene of transferring a virtual object from a first object to a second object, the virtual object includes a virtual object transferred from the first object that initiated the interaction query operation to the second object, and/or a virtual object transferred from the second object and received by the first object that initiated the interaction query operation. Accordingly, the first interactive information may be specifically used to record the summary information that the first object initiating the interaction query operation transferred the virtual object to the second object and/or the summary information that the first object initiating the interaction query operation received the virtual object transferred by the second object.

It can be understood that, before displaying the first interactive information corresponding to at least one virtual object, it is necessary to obtain the first interactive information corresponding to at least one virtual object. Specifically, obtaining the first interactive information corresponding to at least one virtual object may include: obtaining the first interactive information corresponding to at least one virtual object based on one or more object interactive information such as interaction time, object category, target attribute value, number of interactions, and interaction frequency of the virtual object.

As an optional implementation mode of the embodiments of the present disclosure, displaying first interactive information corresponding to at least one virtual object may include: displaying a summary display interface, and the first interactive information corresponding to at least one virtual object is displayed in the summary display interface. The summary display interface may include a first interface area and a second interface area. The first interface area may be used to display an information query control, and the second interface area may be used to display the first interactive information corresponding to at least one virtual object based on the control triggering state of the information query control in the first interface area. The information query control may be understood as a control used to set the query conditions for the first interactive information. By adopting the present technical scheme, the required first interactive information can be easily and quickly queried through the information query control, improving the efficiency and experience of querying the first interactive information.

Alternatively, the information query control may include at least one selected from the group of a classification query control, a time setting control, and an attribute value setting control. The classification query control may be used to filter the object category of the virtual object corresponding to the first interactive information, in order to classify and display the first interactive information according to the object type corresponding to the virtual object. The time setting control may be used to set the time period for filtering the first interactive information or way to sort the first interactive information in a time sequence (from early to late or from late to early), in order to display the first interactive information within the set time period or to display the first interactive information in the set time sorting way. The attribute value setting control may be used to set the target attribute value or range of attribute values corresponding to a virtual object, and to filter the first interactive information corresponding to the virtual object that meets the target attribute value or range of attribute values.

For example, a target navigation bar may be displayed in the first interface area, one or more object type labels are displayed in the target navigation bar. In response to a label selection operation for one or more object type labels, the triggered virtual object is determined based on the label selection operation and the object type label, and at least one piece of the first interactive information corresponding to the triggered virtual object is displayed.

As another optional embodiment of the present disclosure, displaying first interactive information corresponding to at least one virtual object includes: displaying object identifications of a plurality of virtual objects that have undergone interaction operations; in response to an identification trigger operation input for at least one selected from the group of the object identifications, determining the triggered virtual object based on the identification trigger operation and the object identification, and displaying at least one piece of first interactive information corresponding to the triggered virtual object. As mentioned earlier, the occurrence of an interactive event may be understood as the operation that a virtual object interacts to be transferred out or the operation of receiving a virtual object interacted in another account.

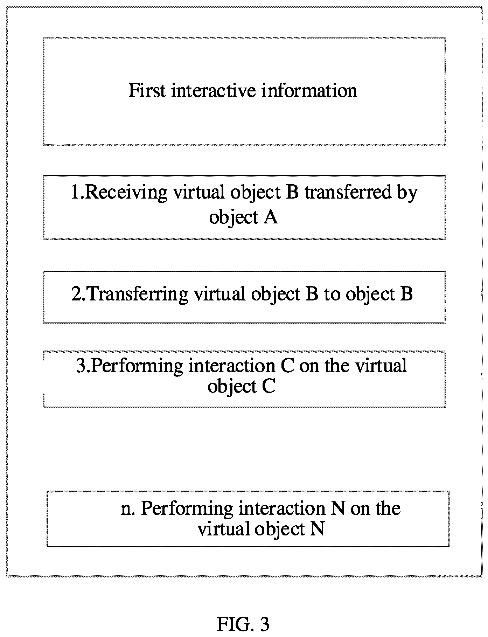

In the case of a plurality of pieces of first interactive information, the plurality of pieces of first interactive information may be presented in the form of a list, i.e., an object interaction list. Each item in the object interaction list may represent an interactive event of a virtual object, which can specifically include the first interactive information corresponding to the virtual object in each interactive event. As shown in FIG. 3, there are a plurality of entries in the display interface of the first interactive information. The first interactive information corresponding to the virtual object may be displayed in the form of a text list. Each entry includes the interactive participants of the virtual object and the identification of the virtual object, the interaction records of the virtual object can be visually viewed, which facilitates tracking of the interaction status of the virtual object.

On the basis of the above scheme, optionally, after displaying the first interactive information corresponding to at least one virtual object, further including: in response to an information viewing request input for the first interactive information, displaying the second interactive information of the virtual object. The second interactive information is detailed description information of the first interactive information. The advantage of this setting is that it allows for a concise and clear understanding of the interactive information of the virtual object through the first interactive information, as well as a more comprehensive and specific understanding of the interactive information of the virtual object through the information viewing request to view the second interactive information of the virtual object.

The information viewing request may be understood as a request for viewing the second interactive information of the virtual object. The information viewing request is usually initiated when it is necessary to obtain more detailed information about a certain piece of first interactive information when viewing the first interactive information. The information viewing request may be initiated based on a detailed viewing operation, and/or based on a preset triggering event (such as a preset function being triggered). The detailed viewing operation may be understood as the interaction operation used to initiate an information viewing request, such as one or more operations such as triggering the preset control, inputting a preset gesture, and inputting a voice command. The detailed viewing operation may specifically include at least one of the operations such as clicking, long pressing and dragging acting on the first interactive information.

The second interactive information may be understood as the specific event description information in the virtual object interactive event corresponding to the first interactive information, which covers no less information than the first interactive information and provides richer content. Specifically, the display content of the second interactive information may include at least one of the following: basic information of the virtual object (including one or more types of information such as the identification, content, and category of the virtual object), records of both interactive parties (including the time of occurrence of the virtual object interactive event and the identification information of the interactor and receiver, as well as the interactive information between the interactor and receiver during the interaction), interactive contextual information (describing the background or context in which a virtual object interactive event occurs, such as interactions during a certain festival, anniversary, or specific event, and whether there are special interactive animations or scene designs), an additional attribute and restriction (any specific condition or limitation regarding the use of the virtual object, such as usage period, whether they can be traded or interacted with again), interaction status (such as received or pending confirmation), and an interaction credential or serial number. The second interactive information provides a window to comprehensively review the interactive event of the virtual object, displays the detailed contents of the interactive event of the virtual object and enhances the interactivity of the interactive event of the virtual object.

In the embodiments of the present disclosure, upon receiving an information viewing request input for the first interactive information, the second interactive information of the virtual object may be obtained and displayed. For example, by clicking on the first interactive information to initiate an information viewing request, and then jumping to a detailed display interface or pop-up window, or raising the display panel from the bottom of the display area to display the second interactive information corresponding to the first interactive information. Alternatively, an information viewing request may be initiated by long pressing the first interactive information, such as selecting "view details" or "view more", and then jump to the detailed display interface or pop-up window, or raise the display panel from the bottom of the display area to display the second interactive information corresponding to the first interactive information, etc.

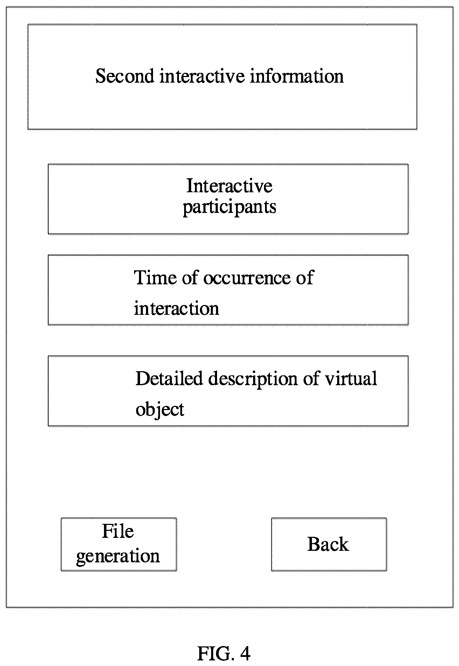

Exemplarily, FIG. 4 is a schematic diagram of the interface of the second interactive information of a method for processing a media file provided by embodiments of the present disclosure. After responding to the information viewing request, displaying the second interactive information of the virtual object, only showing the interactive participants, the time of occurrence of the interaction, and a detailed description of the virtual object. It is clear that other content of the second interactive information may also be displayed on the interface, which is not limited here.

By adopting the present technical scheme, the specific interaction details of a virtual object are displayed in response to the function of an information viewing request, significantly improving the interaction experience and information transparency, achieving hierarchical display of interactive information, and enhancing the flexibility and interactivity of the mode for viewing the interactive information.

S120, in response to a file generation operation input for the first interactive information, obtain interactive associated content corresponding to the virtual object, and generate a target media file in a target file format based on the interactive associated content, where the interactive associated content includes at least part of scene content displayed in an interactive scene of the virtual object.

The file generation operation may be understood as the operation of starting to execute the operation of generating the target media file after being triggered. Specifically, the operation executed for creating a target media file according to the triggered first interactive information is used for converting the interactive scene related to the virtual object into an actual deliverable target media file. The target media file may be understood as a media file created through a series of automated and customized processing steps according to specific requirements, including but not limited to parsing the first interactive information, extracting scene content related to the virtual object, and converting it into an actual media file in the target file format. The interactive associated content may be understood as information directly related to a virtual object interactive event, including but not limited to images, animations, or videos, etc. The interactive associated content depicts the background, tone, and interaction mechanism of the interactive event, enabling the reproduction of an almost real interactive experience in the digital field. The interactive scene may be understood as the specific background environment in which a virtual object interactive event occurs in the virtual space, which may include but is not limited to gift interactions in online games or on social media platforms. The scene content may be understood as the content displayed in an interactive scene, which may include background, atmosphere, and interactive elements, etc. It is the basis of the interactive scene and can finely outline the background layout, atmosphere, and the interaction between participants (interactors and receivers) during the interaction.

For example, in order to enhance the commemorative significance, target elements are determined from preset elements based on at least part of the interactive associated content, such as one or more of elements such as specific color themes, symbols, animation effects, texts, or music. Accordingly, when there are interactive links during the virtual interaction, such as chat records between both parties, screenshots or replays of interaction operations, they may also be integrated into the interactive associated content to more vividly reproduce the entire interactive experience.

As another optional implementation mode of embodiments of the present disclosure, alternatively, before generating the target media file, it further includes: providing a selection interface to select and generate the target media file containing pre-generated interactive associated content, where the selection interface includes an option menu in the form of a checkbox, and the option menu includes corresponding elements of the interactive associated content.

As an example, a user-friendly interface is provided, in which an option menu in the form of a checkbox is integrated, so that specific interactive associated content elements required to generate a target media file may be independently determined, and the following interactive associated content, such as interaction time, interaction participants and interactive scenes, may be quickly identified and selected, and the unchecked interactive associated content may be excluded based on the selected interactive associated content, so as to ensure that the generated target media file only includes the actually needed part. By adopting this technical scheme, not only has resource utilization been optimized, but also highly personalized and optimized output of a virtual object has been achieved.

As an optional technical scheme of embodiments of the present disclosure, for example, intelligent creation based on interactive associated content is performed after generating the target media file. After generating the target media file, a preview window may be displayed to show the preview file of the target media file or the target media file, to preview whether the generated target media file is satisfactory. After being satisfied with the generated target media file, it may be selected to download locally and saved or shared with other objects. The generated target media file may also be directly printed or made into physical gifts.

As another optional implementation mode of embodiments of the present disclosure, based on the above scheme, after generating the target media file in the target file format based on the interactive associated content, it further includes: adding a sharing option for the account that triggered the interaction query operation to forward the target media file to other accounts.

On the basis of the above scheme, alternatively, before the generating the target media file in the target file format based on the interactive associated content, it further includes: determining the target file format of the target media file to be generated in response to a format setting operation.

The format setting operation may be understood as a configuration step aiming at specifying the specific manifestation of generating interactive associated content, that is, the target file format of the target media file. The target file format may include at least one selected from a group consisting of an image format, an animation format, and a video format.

It can be understood that, the determining the target file format of the target media file to be generated in response to a format setting operation may include: displaying the options of the target file format; performing a format setting operation by triggering; determining the target file format of a target media file to be generated; where triggering the format setting operation may include clicking, long pressing, sliding, or pulling down a menu, etc.

For example, when a candidate format type is provided, the target media file format of the pre-generated target media file may be queried through an interface or a pop-up window, such as selecting the corresponding candidate format type (such as "image format", "animation format", "video format"), to generate the target media file in the target file format. In response to no selection being made, a target file format is used by default, for example, for less storage of target media files, the default storage is in image format.

For example, in the interface, various format options are displayed and brief explanations may be provided to help understand the applicable scenes and characteristics of each format; format setting operation is performed by clicking and the selected format is confirmed; after receiving all the customized options for the target file format, the requirements of the target file format are comprehensively considered, the rendering process is optimized to ensure that the generated target media file not only conforms to the set target file format, but also maintains the best visual and auditory quality.

As another optional implementation mode of embodiments of the present disclosure, alternatively, after determining the target file format of the target media file to be generated, it may further include adding an additional setting option, which may be the resolution or size of the generated target media file, etc.

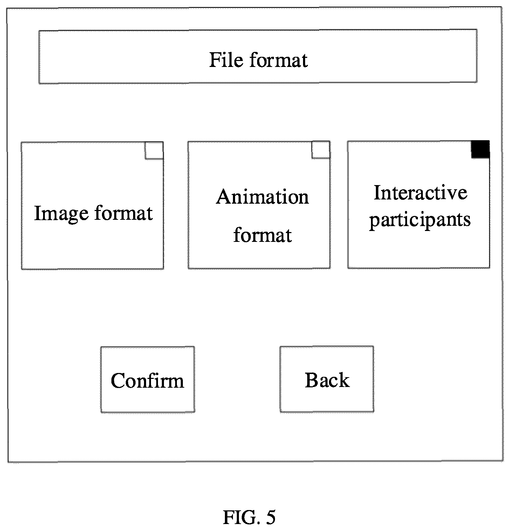

For example, as shown in FIG. 5, it is a schematic diagram of the interface for format setting operation of a method for processing a media file provided by embodiments of the present disclosure. The target file format that needs to be generated may be selected. When selecting the target file format, the small box in the upper right corner of the video format checkbox turns black, indicating that the selected target file format of the input media file is video format.

On the basis of the above scheme, alternatively, the generating the target media file in the target file format based on the interactive associated content includes: obtaining file identification content, and generating the target media file in the target file format based on the interactive associated content and the file identification content.

The file identification content may be understood as the content to be added to the interactive associated content for identifying the target media file. For example, the file identification content may include file name information and/or file addition content, etc. The file name information may be the name or number of the target media file. The file addition content may be custom content added to the target file, including but not limited to one or more of borders, watermarks, or signatures, etc. Alternatively, obtaining file identification content includes: generating file identification content according to preset identification generation rules (such as increasing the number by 1); or obtaining preset keywords and adding them to the preset identification template to generate file identification content, and so on.

For example, identifications such as interaction time, signature (for custom input of "the gift of [interactor identification]"), or watermark ("NO. XXXX/XXXXX") may be added to the generated target media file, or corresponding borders or halos may be added to the generated target media file to create corresponding commemorative books or certificates, enriching the generated target media file for easy sharing and preservation, and increasing visual vividness and fun.

According to the technical scheme of the embodiments of the present disclosure, first interactive information corresponding to at least one virtual object is displayed in response to an interaction query operation, enabling intuitive viewing of the interaction records of the virtual object and facilitating tracking of the interaction and reception status of the object; then, in response to a file generation operation input for the first interactive information, the interactive associated content corresponding to the virtual object is obtained. After the virtual object interacts, the content query can be automatically performed through the first interactive information to obtain the interactive associated content of the virtual object. Since the interactive associated content includes at least part of scene content displayed in an interactive scene of the virtual object, the interactive scene of the virtual object can be effectively restored in combination with the scene content in the interactive scene. Furthermore, based on the interactive associated content, a target media file in the target file format is generated, which solves the technical problem in related technologies that may not be able to record the presentation effect of the virtual object well due to improper manual operation, so that the generated target media file is more suitable for the presentation effect during the interaction, and the situation during the interaction of the virtual object can be effectively, vividly and richly presented , thereby improving the viewing experience of the virtual object.

### Embodiment 2

FIG. 2 is a flow schematic diagram of another method for processing a media file provided by embodiments of the present disclosure. The technical scheme of the embodiments further refines the obtainment of interactive associated content corresponding to the virtual object based on the above embodiments. Alternatively, the obtaining interactive associated content corresponding to the virtual object includes: obtaining second interactive information corresponding to the virtual object, and determining the interactive associated content corresponding to the virtual object according to the second interactive information. The specific implementation mode can refer to the description of the embodiments. The technical features that are the same or similar to the above embodiments will not be repeated here. As shown in FIG. 2, the method of the embodiments may specifically include:
S210, in response to an interaction query operation, display first interactive information corresponding to at least one virtual object.
S220, in response to a file generation operation input for the first interactive information, obtain interactive associated content corresponding to the virtual object, and generate a target media file in a target file format based on the interactive associated content.

For example, the second interactive information is detailed description information of the first interactive information. The second interactive information may specifically include object associated information of the virtual object and scene associated information of the interactive scene. Furthermore, the object associated information may include object content and/or interaction time, etc. The object content may specifically include at least one selected from the group consisting of the identification, detailed description, and preset animation of the virtual object, etc. The interaction time may be the time point or time period when the virtual object interacts. The scene associated information may include index information for querying scene related content. The index information may be understood as information used to assist in constructing the second interactive information, and facilitate to find information about the interactive scene. The index information may be keywords or tags for querying and matching scene related content, ensuring that the generated interactive associated content is highly compatible with the interactive scene, enhancing personalization and immersion. For example, in a live streaming scene, the scene associated information may include at least one of the following information: the account identification of a live streaming account, live streaming time (start time and/or end time), and live livestreaming identification, etc.

It can be understood that interactive associated content may be the part of the content associated with the interactive event of the virtual objects in the interactive scene. The interactive associated content may be stored in one or more scene files in the interactive scene. For example, when saving scene information of the interactive scene through screen recording, there may only be one scene file corresponding to the interactive scene; when storing information based on a plurality of sources of scene information in an interactive scene, there may be a plurality of scene files corresponding to the interactive scene.

Alternatively, the determining the interactive associated content corresponding to the virtual object based on the second interactive information includes: obtaining at least one target scene file corresponding to the interactive scene of the virtual object according to the scene associated information of the interactive scene; obtaining the interactive associated content corresponding to the virtual object from the target scene file according to the object associated information of the virtual object.

The target scene file may be understood as a specific content file including an interactive scene related to a virtual object. By adopting this technical scheme, it is possible to accurately and quickly query the target scene file related to the interactive scene of the virtual object based on the scene associated information of the interactive scene, and then accurately extract the interactive associated content corresponding to the virtual object from the target scene file. This achieves the restoration of scene display information when the virtual objects interact in the interactive scene, thereby enriching the content in the target media file while displaying the virtual object.

It can be understood that virtual object interaction may be accompanied by rendering of the virtual object, including but not limited to animation or images. When a plurality of virtual objects need to be rendered in the target scene, there may be a delay in the rendering of the virtual objects. Therefore, the target scene file for the next time period of the interactive scene of the virtual objects can be obtained to ensure that the target media file contains the display content of the virtual object.

As mentioned above, the number of target scene files may be one or more. Alternatively, the generating the target media file in the target file format based on the interactive associated content includes: in response to there being a plurality of target scene files, fusing the interactive associated content corresponding to the plurality of target scene files into the target media file in the target file format according to content display time.

The target scene file includes a virtual object file and a scene content file. The virtual object file may be understood as a file for rendering a virtual object. The scene content file may be understood as a file used to store scene content in interactive scenes. For example, the scene content file may specifically include at least one selected from the group consisting of a scene image file, a scene audio files, and a scene comment file.

In response to there being a plurality of target scene files, the interactive associated content corresponding to each target scene file are respectively obtained according to the object associated information and scene associated information in the second interactive information; furthermore, according to the content display time and target file format, the interactive associated content corresponding to the plurality of target scene file is aligned in time and then content fusion is performed to obtain the target media file.

As another alternative implementation mode of the embodiments of the present disclosure, alternatively, the generating the target media file in the target file format based on the interactive associated content includes: in response to there being one target scene file, generating the target media file in the target file format based on the interactive associated content corresponding to the target scene file.

When the target scene file is stored in the database, without splitting and storing the included interactive associated content, that is, the included interactive associated content is directly fused for storage. The interactive associated content corresponding to the virtual object may be directly obtained from the target scene file based on the object associated information of the virtual object, and the target media file in the target file format may be generated based on the interactive associated content. That is to say, no fusion operation is required.

According to the technical scheme of the embodiment of the present disclosure, by obtaining object associated information and scene associated information in the second interactive information, and using the information to accurately matching the target scene file, the specific context of the virtual object interaction can be highly restored. Due to the various types such as scene images, audio, and comments included in the scene content file, the generated target media file can contain multidimensional information, not limited to vision, but may also include auditory and visual interactive elements, greatly enriching the expressive power of interactive content. When there are a plurality of target scene files, they are automatically fused into the target media file, and the time sequence of different content displays is considered to achieve orderly connection and smooth transition of content. By deeply integrating multidimensional information of virtual objects and interactive contexts, the display effect of virtual objects has been improved.

### Embodiment 3

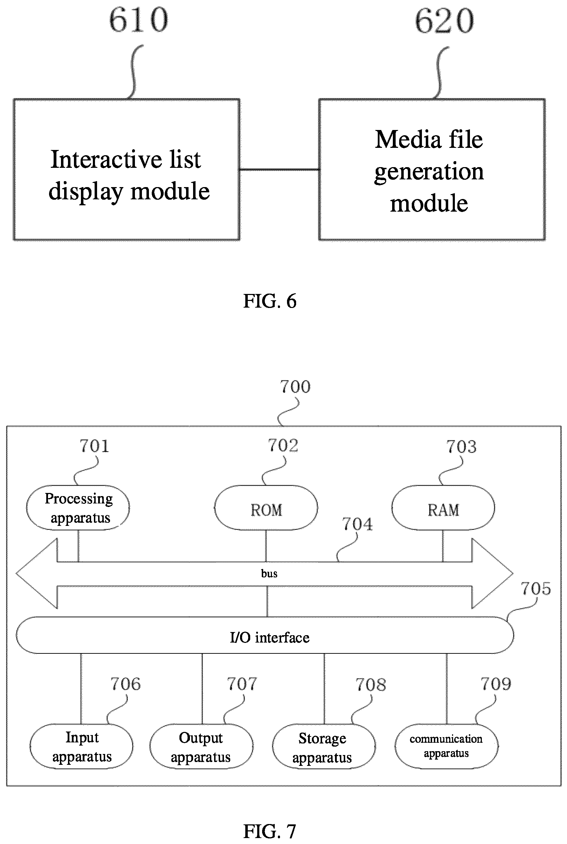

FIG. 6 is a structural schematic diagram of an apparatus for processing a media file media file provided by embodiment 3 of the present disclosure, which can be implemented in the form of software and/or hardware. As shown in FIG. 6, the apparatus for processing a media file includes an interactive list display module 610 and a media file generation module 620.

The interactive list display module 610 is configured to, in response to an interaction query operation, display first interactive information corresponding to at least one virtual object; the media file generation module 620 is configured to, in response to a file generation operation input for the first interactive information, obtain interactive associated content corresponding to the virtual object, and generate a target media file in a target file format based on the interactive associated content, where the interactive associated content includes at least part of scene content displayed in an interactive scene of the virtual object.

According to the technical scheme of the embodiments of the present disclosure, first interactive information corresponding to at least one virtual object is displayed through the interactive list display module 610, in response to an interaction query operation, enabling intuitive viewing of the interaction records of the virtual object and facilitating tracking of the interaction and reception status of the object; then, the interactive associated content corresponding to the virtual object is obtained through the media file generation module 620, in response to the file generation operation input for the first interactive information. After the virtual object interacts, the content query can be automatically performed at any time through the first interactive information to obtain the interactive associated content of the virtual object. Since the interactive associated content includes at least part of the scene content displayed in an interactive scene of the virtual object, the interactive scene of the virtual object can be effectively restored in combination with the scene content in the interactive scene. Furthermore, based on the interactive associated content, a target media file in the target file format is generated, which solves the technical problem in related technologies that may not be able to record the presentation effect of the virtual object well due to improper manual operation, so that the generated target media file is more suitable for the presentation effect during the interaction, and the situation during the interaction of the virtual object can be effectively, vividly and richly presented , thereby improving the viewing experience of the virtual object.

On the basis of the above alternative technical schemes, the media file generation module 620 may include a content determination submodule. The content determination submodule is configured to obtain second interactive information corresponding to the virtual object, and determine the interactive associated content corresponding to the virtual object according to the second interactive information, where the second interactive information is detailed description information of the first interactive information.

On the basis of the above alternative technical schemes, alternatively, the second interactive information may include object associated information of the virtual object and scene associated information of the interactive scene. Furthermore, the content determination submodule may include a scene file acquisition unit and an associated content acquisition unit. The scene file acquisition unit is configured to obtain at least one target scene file corresponding to the interactive scene of the virtual object according to the scene associated information of the interactive scene, where the scene associated information includes index information for querying scene related content; the associated content acquisition unit is configured to obtain the interactive associated content corresponding to the virtual object from the target scene file according to the object associated information of the virtual object, where the object associated information includes object content and/or interactive time.

On the basis of the above alternative technical schemes, the media file generation module 620 may further include a content fusion submodule. The content fusion submodule is configured to, in response to there being a plurality of target scene files, fuse the interactive associated content corresponding to the plurality of target scene files into the target media file in the target file format according to content display time.

On the basis of the above alternative technical schemes, the target scene file may include a virtual object file and a scene content file, and the scene content file may include at least one selected from a group consisting of a scene image file, a scene audio file, and a scene comment file.

On the basis of the above alternative technical schemes, the apparatus may further include an interactive detailed display module. The interactive detailed display module is configured to, in response to an information viewing request input for the first interactive information, display second interactive information of the virtual object, where the second interactive information is detailed description information of the first interactive information.

On the basis of the above alternative technical schemes, the apparatus may further include a file format determination module. The file format determination module is configured to, in response to a format setting operation, determine the target file format of the target media file to be generated, where the target file format includes at least one selected from a group consisting of an image format, an animation format, and a video format.

On the basis of the above alternative technical schemes, the media file generation module 620 may be configured to obtain file identification content and generate the target media file in the target file format based on the interactive associated content and the file identification content, where the file identification content includes file name information and/or file addition content.

The apparatus for processing a media file provided by the embodiments of the present disclosure can execute any of the method for processing a media file provided in the embodiments of the present disclosure, and has corresponding functional modules and beneficial effects for executing the method for processing a media file.

It is worth noting that the various units and modules included in the above apparatus are only divided according to functional logic, but are not limited to the above division, as long as they can achieve the corresponding function; in addition, the specific names of each functional unit are only for the purpose of distinguishing them from each other and are not intended to limit the scope of protection of the embodiments of the present disclosure.

### Embodiment 4

FIG. 7 is a structural schematic diagram of an electronic device provided by embodiment 4 of the present disclosure. Referring to FIG. 7, FIG. 7 illustrates a schematic structural diagram of an electronic device(e.g., the terminal device or server in FIG. 7) 700 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 7 is merely an example, and should not pose any limitation to the functions and the range of use of the embodiments of the present disclosure.

As illustrated in FIG. 7, the electronic device 700 may include a processing apparatus 701 (e.g., a central processing unit, a graphics processing unit, etc.), which can perform various suitable actions and processing according to a program stored in a read-only memory (ROM) 702 or a program loaded from a storage apparatus 708 into a random-access memory (RAM) 703. The RAM 703 further stores various programs and data required for operations of the electronic device 700. The processing apparatus 701, the ROM 702, and the RAM 703 are interconnected by means of a bus 704. An input/output (I/O) interface 705 is also connected to the bus 704.

Usually, the following apparatus may be connected to the I/O interface 705: an input apparatus 706 including, for example, a touch screen, a touch pad, a keyboard, a mouse, a camera, a microphone, an accelerometer, a gyroscope, or the like; an output apparatus 707 including, for example, a liquid crystal display (LCD), a loudspeaker, a vibrator, or the like; a storage apparatus 708 including, for example, a magnetic tape, a hard disk, or the like; and a communication apparatus 709. The communication apparatus 709 may allow the electronic device 700 to be in wireless or wired communication with other devices to exchange data. While FIG. 7 illustrates the electronic device 700 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 709 and installed, or may be installed from the storage apparatus 708, or may be installed from the ROM 702. When the computer program is executed by the processing apparatus 701, the above-mentioned functions defined in the methods of some embodiments of the present disclosure are performed.

The names of the messages or information interacted between the plurality of devices in the embodiments of the present disclosure are used for illustrative purposes only, and are not intended to be used to impose limitations on the scope of such messages or information.

The electronic device provided by the embodiments of the present disclosure belongs to the same inventive concept as the method for processing a media file provided in the above embodiments, and technical details not exhaustively described in this embodiment can be found in the above embodiments, and this embodiment has the same beneficial effect as the above embodiments.

### Embodiment 5

Embodiment 5 of the present disclosure provide a non-transitory computer-readable storage medium having computer-executable instructions stored thereon, where the computer executable instructions, when executed by a computer processor, perform the method for processing a media file according to any one of the embodiments of the present disclosure.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: display a background image; display an initial picture of a target visual effect at a preset position of the background image; control the target visual effect to gradually change from the initial picture to a target picture in response to a visual effect change instruction triggered by a user; and adjust a filter effect of the background image to allow the filter effect of the background image to gradually change from a first filter effect to a second filter effect during a change of the target visual effect.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, [Embodiment 1] provides a method for processing a media file including: in response to an interaction query operation, displaying first interactive information corresponding to at least one virtual object; and in response to a file generation operation input for the first interactive information, obtaining interactive associated content corresponding to the virtual object, and generating a target media file in a target file format based on the interactive associated content, where the interactive associated content includes at least part of scene content displayed in an interactive scene of the virtual object.

According to one or more embodiments of the present disclosure, [Embodiment 2] provides the method of Embodiment 1, further including: optionally, the obtaining the interactive associated content corresponding to the virtual object, includes: obtaining second interactive information corresponding to the virtual object, and determining the interactive associated content corresponding to the virtual object according to the second interactive information, where the second interactive information is detailed description information of the first interactive information.

According to one or more embodiments of the present disclosure, [Embodiment 3] provides the method of Embodiment 2, further including: optionally, the second interactive information includes object associated information of the virtual object and scene associated information of the interactive scene; the determining the interactive associated content corresponding to the virtual object according to the second interactive information, includes: obtaining at least one target scene file corresponding to the interactive scene of the virtual object according to the scene associated information of the interactive scene, where the scene associated information includes index information for querying scene related content; and obtaining the interactive associated content corresponding to the virtual object from the target scene file according to the object associated information of the virtual object, where the object associated information includes object content and/or interactive time.

According to one or more embodiments of the present disclosure, [Embodiment 4] provides the method of Embodiment 3, further including: optionally, the target scene file includes a virtual object file and a scene content file; and the scene content file includes at least one selected from a group consisting of a scene image file, a scene audio file, and a scene comment file.

According to one or more embodiments of the present disclosure, [Embodiment 6] provides the method of Embodiment 1, further including: optionally, after displaying the first interactive information corresponding to the at least one virtual object, the method further includes: in response to an information viewing request input for the first interactive information, displaying second interactive information of the virtual object, where the second interactive information is detailed description information of the first interactive information.

According to one or more embodiments of the present disclosure, [Embodiment 7] provides the method of Embodiment 1, further including: optionally, before generating the target media file in the target file format based on the interactive associated content, the method further includes: in response to a format setting operation, determining the target file format of the target media file to be generated, where the target file format includes at least one selected from a group consisting of an image format, an animation format, and a video format.

According to one or more embodiments of the present disclosure, [Embodiment 8] provides the method of Embodiment 1, further including: optionally, the generating a target media file in a target file format based on the interactive associated content, includes: obtaining file identification content and generating the target media file in the target file format based on the interactive associated content and the file identification content, where the file identification content includes file name information and/or file addition content.

According to one or more embodiments of the present disclosure, [Embodiment 9] provides an apparatus for processing a media file including: an interactive list display module, which is configured to, in response to an interaction query operation, display first interactive information corresponding to at least one virtual object; and a media file generation module, configured to, in response to a file generation operation input for the first interactive information, obtain interactive associated content corresponding to the virtual object, and generate a target media file in a target file format based on the interactive associated content, where the interactive associated content includes at least part of scene content displayed in an interactive scene of the virtual object.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims. Specific manners of operations performed by the modules in the apparatus in the above embodiment have been described in detail in the embodiments regarding the method, which will not be explained and described in detail herein again.

## Claims

1. A method for processing a media file, comprising:
in response to an interaction query operation, displaying first interactive information corresponding to at least one virtual object (S110); and
in response to a file generation operation input for the first interactive information, obtaining interactive associated content corresponding to the virtual object, and generating a target media file in a target file format based on the interactive associated content, wherein the interactive associated content comprises at least part of scene content displayed in an interactive scene of the virtual object (S120).

2. The method according to claim 1, wherein the obtaining the interactive associated content corresponding to the virtual object, comprises:
obtaining second interactive information corresponding to the virtual object, and determining the interactive associated content corresponding to the virtual object according to the second interactive information, wherein the second interactive information is detailed description information of the first interactive information.

3. The method according to claim 2, wherein the second interactive information comprises object associated information of the virtual object and scene associated information of the interactive scene; the determining the interactive associated content corresponding to the virtual object according to the second interactive information, comprises:
obtaining at least one target scene file corresponding to the interactive scene of the virtual object according to the scene associated information of the interactive scene, wherein the scene associated information comprises index information for querying scene related content; and
obtaining the interactive associated content corresponding to the virtual object from the target scene file according to the object associated information of the virtual object, wherein the object associated information comprises object content and/or interactive time.

4. The method according to claim 3, wherein the generating a target media file in a target file format based on the interactive associated content, comprises:
in response to there being a plurality of target scene files, fusing the interactive associated content corresponding to the plurality of target scene files into the target media file in the target file format according to content display time.

5. The method according to claim 3 or claim 4, wherein the target scene file comprises a virtual object file and a scene content file; and the scene content file comprises at least one selected from a group consisting of a scene image file, a scene audio file, and a scene comment file.

6. The method according to any one of claims 1-5, wherein after displaying the first interactive information corresponding to the at least one virtual object, the method further comprises:
in response to an information viewing request input for the first interactive information, displaying second interactive information of the virtual object, wherein the second interactive information is detailed description information of the first interactive information.

7. The method according to any one of claims 1-6, wherein before generating the target media file in the target file format based on the interactive associated content, the method further comprises:
in response to a format setting operation, determining the target file format of the target media file to be generated, wherein the target file format comprises at least one selected from a group consisting of an image format, an animation format, and a video format.

8. The method according to any one of claims 1-7, wherein the generating a target media file in a target file format based on the interactive associated content, comprises:
obtaining file identification content and generating the target media file in the target file format based on the interactive associated content and the file identification content, wherein the file identification content comprises file name information and/or file addition content.

9. An apparatus for processing a media file, comprising:
an interactive list display module (610), configured to, in response to an interaction query operation, display first interactive information corresponding to at least one virtual object;
a media file generation module (620), configured to, in response to a file generation operation input for the first interactive information, obtain interactive associated content corresponding to the virtual object, and generate a target media file in a target file format based on the interactive associated content, wherein the interactive associated content comprises at least part of scene content displayed in an interactive scene of the virtual object.

10. The apparatus according to claim 9, wherein the media file generation module comprises a content determination submodule, wherein the content determination submodule is configured to, obtain second interactive information corresponding to the virtual object, and determining the interactive associated content corresponding to the virtual object according to the second interactive information, wherein the second interactive information is detailed description information of the first interactive information.

11. The apparatus according to claim 10, wherein the content determination submodule comprises a scene file acquisition unit and an associated content acquisition unit, wherein,
the scene file acquisition unit is configured to, obtain at least one target scene file corresponding to the interactive scene of the virtual object according to the scene associated information of the interactive scene, wherein the scene associated information comprises index information for querying scene related content; and
the associated content acquisition unit is configured to, obtain the interactive associated content corresponding to the virtual object from the target scene file according to the object associated information of the virtual object, wherein the object associated information comprises object content and/or interactive time.

12. The apparatus according to claim 11, wherein the media file generation module further comprises a content fusion submodule, wherein,
the content fusion submodule is configured to, in response to there being a plurality of target scene files, fuse the interactive associated content corresponding to the plurality of target scene files into the target media file in the target file format according to content display time.

13. The apparatus according to claim 9 further comprising: an interactive detailed display module, configured to, in response to an information viewing request input for the first interactive information, display second interactive information of the virtual object, wherein the second interactive information is detailed description information of the first interactive information.

14. An electronic device, comprising:
one or more processors;
a storage device used to store one or more programs,
when the one or more programs are executed by the one or more processors, causing the one or more processors to implement the method for processing a media file according to any one of claims 1-8.

15. A storage medium having computer-executable instructions stored thereon, wherein the computer executable instructions, when executed by a computer processor, perform the method for processing a media file according to any one of claims 1-8.
